# EUROPEAN PATENT APPLICATION

(11) **EP 4 123 107 A1**
(43) Date of publication of application: **25.01.2023**
(21) Application number: 22169240.3
(22) Date of filing: 21.04.2022
(51) Int. Cl.: E04H 1/12, A47B 96/06

(54) **RAIL SYSTEM FOR WALL OR STRUCTURE**

(30) Priority: 21.04.2021 US 202163177545 P
(71) Applicant: Techtronic Cordless GP, Anderson, SC 29621 (US)
(72) Inventor: STEADINGS, Steve, Anderson, SC 29621 (US); GORDON, Patrick, Anderson, SC 29621 (US); DAVIDIAN, Richard M., Anderson, SC 29621 (US); CHAN, Rony C., Anderson, SC 29621 (US)
(74) Representative: Parker, Andrew James

(57) **Abstract**

A support panel including a panel body and a rail integrally formed with the panel body. The rail protrudes away from the panel body. The rail includes a surface configured to engage a mounting feature of an assembly to be mounted upon the panel body by the rail.

## Description

### CROSS-REFERENCE TO RELATED APPLICATION

This application claims priority to U.S. Provisional Patent Application No. 63/177,545, filed April 21, 2021, the entire contents of which are incorporated by reference herein.

### TECHNICAL FIELDs

The present disclosure relates to storage systems, and more particularly to rail systems or the like.

### BACKGROUND

In conventional systems, a user individually installs one or more individual rails (e.g., to support one or more hooks) on a wall (e.g., of a garage or storage unit), which can be tedious. The rails may be erroneously secured to the wall at an undesired angle relative to a floor (e.g., of the garage or storage unit) and/or erroneously secured at an undesired angle relative to another rail.

### SUMMARY

In one independent aspect, a support panel includes a panel body and a rail integrally formed with the panel body. The rail protrudes away from the panel body. The rail includes a surface configured to engage a mounting feature of an assembly to be mounted upon the panel body by the rail.

In another independent aspect, a support panel includes a first panel body, a second panel body, and a hinge element. The first panel body includes a first rail integrally formed with the first panel body. The first rail protrudes from the first panel body. The first rail includes a first surface configured to engage a mounting feature of an assembly. The second panel body includes a second rail integrally formed with the second panel body. The second rail protrudes from the second panel body. The second rail includes a second surface configured to engage the mounting feature of the assembly. The hinge element is coupled to the first panel body and the second panel body. The hinge element is configured to permit movement of the first panel body relative to the second panel body.

In yet another independent aspect, a support panel assembly includes a first panel and a second panel. The first panel has a first panel body having a first end and a first rail protruding away from the first panel body. The first rail is integrally formed with the first panel body. The first panel further includes a first mating feature positioned adjacent the first end. The second panel has a second panel body having a second end and a second rail protruding away from the second panel body. The second panel further includes a second mating feature positioned adjacent the second end. The first mating feature is configured to engage the second mating feature to couple the first panel body to the second panel body.

Other aspects of the disclosure will become apparent by consideration of the detailed description and accompanying drawings.

### BRIEF DESCRIPTION OF THE DRAWINGS

FIG. 1 is a perspective view of a storage system including walls having rails thereon, with a ceiling removed.
FIG. 2 is a perspective view of the prefabricated storage system of FIG. 1 including a ceiling.
FIG. 3 is a perspective view of a storage system including walls having a wall panel applied thereto.
FIG. 4 is a side view of a rail and a hook assembly coupled to the rail.
FIG. 5 is a perspective view of the wall panel in a folded configuration.
FIG. 6 is a perspective view of the wall panel in a tented configuration.
FIG. 6A is a perspective view of the wall panel in a flat configuration.
FIG. 7 is a front perspective view of the wall panel and an adjacent wall panel connected to each other at a corner.
FIG. 8 is a rear perspective view of the wall panel and the adjacent wall panel positioned adjacent to each other at the corner.
FIG. 9 is another rear perspective view of the wall panel and the adjacent wall panel positioned adjacent to each other at the corner with a mating feature of the wall panel engaging a mating feature of the adjacent wall panel.
FIG. 10 is another front perspective view of the wall panel and the adjacent wall panel with the wall panel including a mating feature projecting therefrom.
FIG. 11 is a front view of the wall panel.

### DETAILED DESCRIPTION

Before any aspects are explained in detail, it is to be understood that the disclosure is not limited in its application to the details of construction and the arrangement of components set forth in the following description or illustrated in the following drawings. The disclosure is capable of other embodiments and of being practiced or of being carried out in various ways. Also, it is to be understood that the phraseology and terminology used herein is for the purpose of description and should not be regarded as limiting.

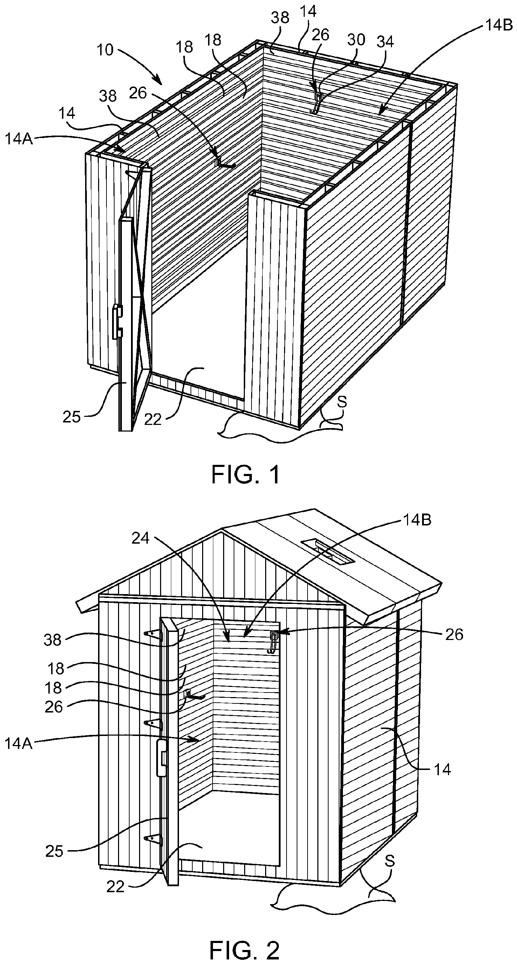

FIG. 1 illustrates a storage system 10 including walls 14 and rails 18. In some embodiments, the rails 18 may be pre-formed and be integral with a wall 14 (e.g., formed as a portion of the wall). In other embodiments, the rails 18 may be pre-formed separately from and then be attached to the wall 14. The rails 18 may be positioned on the walls 14 at predetermined distances between a floor 22 and a ceiling 24 (FIG. 2) of the storage system 10. In the illustrated embodiment, the rails 18 are provided at regular intervals between the floor 22 and the ceiling 24 along the entire height of each wall 14. The walls 14 can be assembled into the storage system 10 (e.g., a storage closet, a shed, etc.) which may optionally include a dedicated floor (i.e., floor 22) and/or a dedicated ceiling (i.e., ceiling 24). Alternatively, at least one of the walls 14 of the storage system 10 may not have rails 18, and the wall 14 without pre-formed rails 18 may be considered a planar wall 14. Finally, in some embodiments, at least one of the walls 14 of the system 10 may include a door 25.

As briefly mentioned above and in some embodiments, the rails 18 may be formed integrally with the walls 14. For example, the walls 14 may be formed from a moldable material (e.g., a molded plastic) and is molded to include the rail 18. The rail 18 may include a cross-sectional shape that is configured to receive a hook assembly 26. The hook assembly 26 may comprise a bracket 30 and a hook member 34 secured to the bracket 30. The bracket 30 may be shaped to engage and correspond with the cross-sectional shape of the rail 18. Once the bracket 30 is attached to the rail 18, the hook assembly 26 can support objects on the walls 14 via the rails 18. With respect to the embodiment illustrated in FIGS. 1-3, the system 10 may have four walls 14. One of the walls 14 may include a plurality of rails 18 (i.e., a first plurality of rails), and another adjacent wall 14 may include another plurality of rails 18 (i.e., a second plurality of rails). The rails 18 of a first wall 14A may be provided at the same height relative to the floor 22 as the rails 18 of a second wall 14B, such that the rails 18 of the first and second walls 14 are aligned with one another.

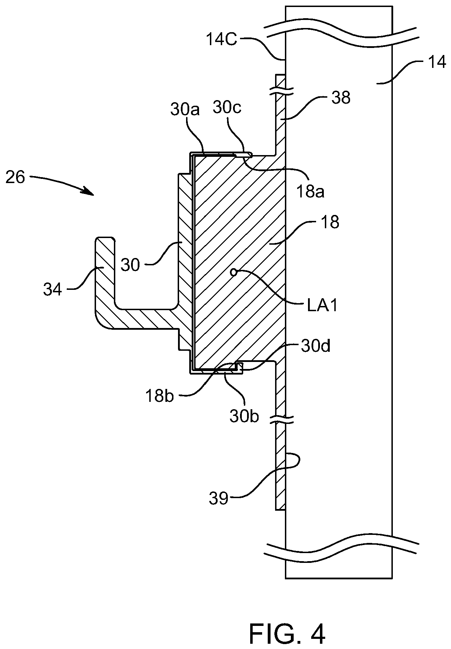

In some embodiments, one or more of the walls 14 may be planar, and a wall panel 38 (i.e., a panel body) including multiple rails 18 may be attached to a planar wall 14C. The wall panel 38 may also include a wall facing side 39 (FIG. 4) which is optionally planar. One exemplary planar wall 14C is illustrated in FIG. 4. In this embodiment, the wall panel 38 may be secured to the wall 14 by a variety of mechanisms. For example, the mechanism may include, without limitation, a fastener (e.g., a screw, a bolt, a nail, etc.), an adhesive (which permits the wall panel 38 to function as a "3D wallpaper") that connects the wall panel 38 to the planar wall 14, and/or the like. The rails 18 of the wall panel 38 may support the hook assembly 26 and other objects on the hook assembly 26 as in the rails 18 of the first embodiment.

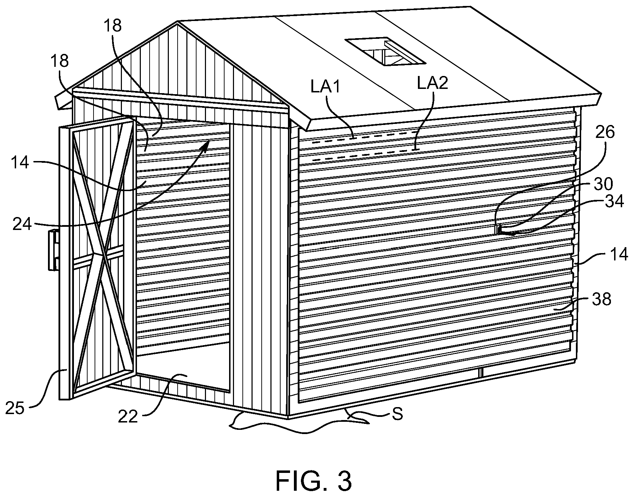

As illustrated in FIG. 3, the wall panel 38 may be large panels approximately as large as the wall 14. The wall panel 38 may be slightly smaller than the wall 14 for use on the interior or exterior of the wall 14. The wall panel 38 may be dimensioned with a similar height and/or a similar width when compared to the wall 14. In some embodiments, the wall panel 38 may have a width at least as large as a width between studs of the wall 14. Accordingly, the wall panel 38 may be securely fastened to the wall 14. The wall panel 38 may be otherwise sized and/or dimensioned according to a user's application. Size and dimensions of the wall panel 38 may be optimized depending on a user's application. The wall panel 38 may be blow molded, injection molded, extruded, and the like. Other known manufacturing processes may also form the wall panel 38.

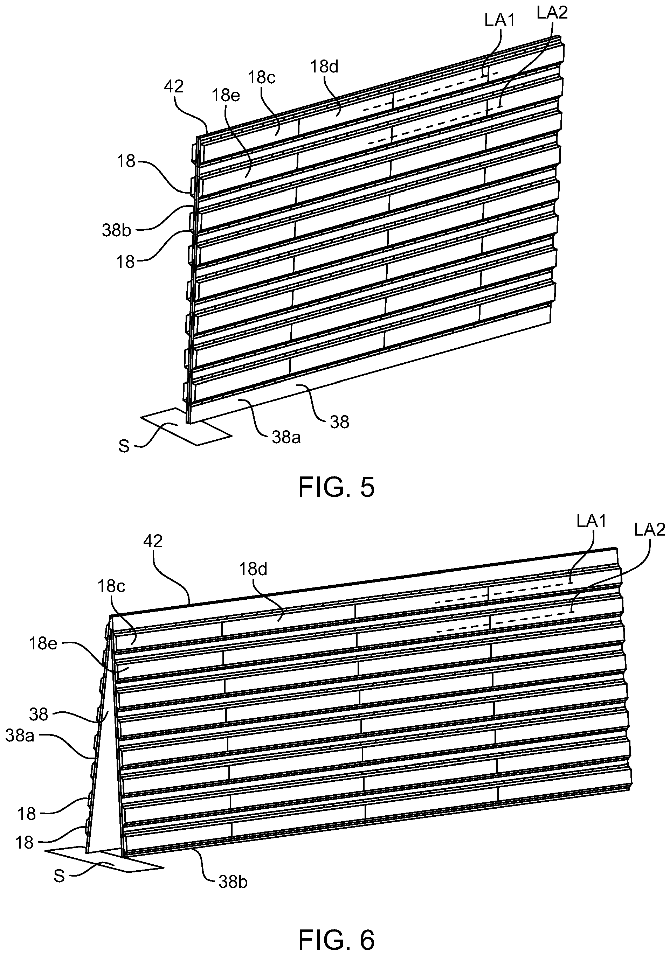

By providing a wall 14 with multiple pre-formed rails 18 or a wall 14 configured to engage the wall panel 38 with multiple pre-formed rails 18, installation of the rails 18 is simplified. The rail 18 is integrally formed with the wall panel 38. The rail 18 protrudes away from the wall panel 38. The use of pre-formed rails 18 obviates the need to make multiple measurements to level the rails 18 relative to the floor 22 and/or relative to other rails 18. The wall 14 with multiple pre-formed rails 18 (e.g., FIG. 2) and the wall panel 38 (e.g., FIG. 5) may be provided with as little as two rails 18, or may be provided with many rails 18 to cover the wall 14 from the floor 22 to the ceiling 24. The hook assembly 26 can be coupled to one of the rails 18 to hang objects on the wall 14 without additional measurement and/or securement. The wall panel 38 may also be secured to a planar wall 14C of the storage system 10 that does not have pre-formed rails 18 provided thereon. This permits the user to easily add additional wall panels 38 having parallel rails 18 to the storage system 10 including existing planar wall(s) 14C.

FIG. 3 illustrates the wall 14 with the wall panel 38 provided on the exterior thereof. In some embodiments, the wall 14 may have one wall panel 38 provided on one surface thereof (i.e., an interior surface of the wall 14) and another wall panel 38 provided on another surface thereof (i.e., an exterior surface of the wall 14). In some embodiments, the surface and the other surface of the wall may oppose (i.e., face away from) each other. The wall panel 38 includes one or more pre-formed rails 18 as in the wall panel 38 of FIGS. 1 and 2. Adjacent rails 18 of the wall panel 38 extend along rail axes LA1 and LA2. The rail axes LA1 and LA2 are offset from another in a direction perpendicular to a surface S upon which the wall 14 is supported (e.g., a vertical direction).

FIG. 4 illustrates a section view of the wall panel 38 and the rail 18 thereof, and the hook assembly 26. The hook assembly 26 is secured to the wall panel 38 with the bracket 30 engaging the rail 18. The bracket 30 includes a first bracket portion 30a and a second bracket portion 30b. The first and second bracket portions 30a, 30b each extend from the hook member 34 of the bracket 30. The first and second bracket portions 30a, 30b each include a mounting feature 30c, 30d. In the illustrated embodiment, the mounting features 30c, 30d are enlarged width fingers. The mounting features 30c, 30d have larger widths when compared to the first bracket portion 30a and the second bracket portion 30b, respectively. The rail 18 includes a first surface 18a configured to engage the mounting feature 30c and a second surface 18b configured to engage the mounting feature 30d. Accordingly, the hook assembly 26 may be an assembly to be mounted upon the wall panel 38 by the rail 18. The first surface 18a may be a slot provided in the rail 18 depressed towards the rail axis LA1 of the rail 18. The second surface 18b may be a shoulder defined on the outer surface of the rail 18. In some embodiments, both the surfaces 18a, 18b of the rail 18 are external surfaces of the rail 18. Accordingly, the mounting features 30c, 30d may engage the surfaces 18a, 18b to inhibit removal of the bracket 30 from the rail 18. Each rail 18 (i.e., the rails 18c-18d of FIG. 5, described below) may include at least one of the surfaces 18a, 18b. Other similar surfaces 18a, 18b, external or internal to the rail 18, are envisioned.

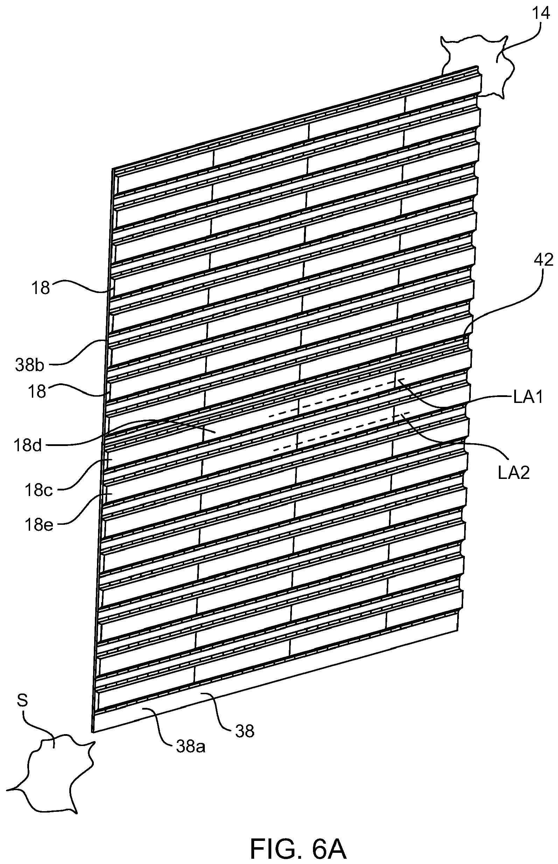

In some embodiments, portions of the wall panel 38 may be coupled to one another by a movable member, such as a pivot coupling 42 (e.g., a hinge, a deformable member (e.g., a foam or plastic hinge), and/or the like). As shown in FIGS. 5 and 6, respectively, the wall panel 38 is movable between a folded configuration (FIG. 5) and a flat configuration (FIG. 6A). Between the folded configuration (FIG. 5) and the flat configuration (FIG. 6A), the wall panel 38 is moved to an intermediate configuration (FIG. 6). In the folded configuration (FIG. 5), the wall panel 38 has opposing surfaces preformed into rails 18. The wall panel 38 may be configured to be free-standing upon the surface S. In other embodiments, the wall panel 38 may be attached to another structure (e.g., the wall 14) for hanging brackets 30 and/or other objects thereon. The folded configuration (FIG. 5) illustrates one exemplary configuration of the panel 38 for storage and/or transport of the panel 38. Alternatively, the panel 38 may be held in the folded configuration, and hook assemblies 26 may engage the rails 18 thereof for supporting objects thereon (i.e., the panel 38 may be configured for use in the folded configuration). The intermediate configuration of the panel 38 presents another exemplary configuration of the panel 38 for storage and/or transport of the panel 38.

In the folded configuration (FIG. 5) and the unfolded configuration (e.g., FIG. 3), the first panel body 38a and the second panel body 38b are co-planar with each other. In the tented configuration (FIG. 6), portions of the panel 38 (e.g., the first panel body 38a and the second panel body 38b) may be oriented relative to each other in a non-coplanar orientation.

In each of FIGS. 5 and 6, the panel 38 includes a first panel body 38a and a second panel body 38b. Each panel body 38a, 38b may include a plurality of rails 18 formed thereon. For example, the wall panel 38a includes a rail 18c, a rail 18d, and a rail 18e. The rail 18c and the rail 18d each extend along the rail axis LA1. The rail 18d is spaced from the rail 18c in a longitudinal direction parallel to the rail axis LA1 with the rail 18c aligned with the rail 18d. The rail 18e extends along the rail axis LA2. The rail 18e extends substantially parallel to the rail 18c and the rail 18d, but the rail 18e is spaced from the rail 18c and the rail 18d in a lateral direction generally perpendicular to the rail axis LA1. Any number of rails 18, 18d, 18e may be provided on any number of panel bodies 38 in this manner.

The pivot coupling 42 is coupled to both the first panel body 38a (i.e., a first panel) and the second panel body 38b. In some embodiments, the second panel body 38b (i.e., a second panel) may further include a plurality of rails 18 in a similar or modified arrangement when compared to the rails 18c-18d of the first panel body 38a. The pivot coupling 42 is configured to permit movement of the first panel body 38a relative to the second panel body 38b. In some embodiments, the pivot coupling 42 may be a living hinge integrally formed by at least one of the first panel body 38a and the second panel body 38b. Living hinges are types of hinges that are comprised of a piece of flexible material connected to and integrally formed with two main components and configured to permit pivoting movement of the two main components relative to one another. Living hinges contrast with typical mechanical hinges. Typical mechanical hinges include at least two hinge components, where each hinge component is coupled to a corresponding one of the main components. The two hinge components are rotatable relative to one another. In other embodiments, the pivot coupling 42 may be a living hinge integrally formed by the first panel body 38a and the second panel body 38b. The pivot coupling 42 is rotatably coupled to both the first panel body 38a and the second panel body 38b. The pivot coupling 42 is configured to permit movement of the first panel body 38a relative to the second panel body 38b. In the illustrated embodiment, the pivot coupling 42 may permit pivoting (i.e., rotational) movement of the first panel body 38a relative to the second panel body 38b about an edge of the first panel body 38a. In the illustrated embodiment, the edge extends parallel to the first longitudinal axis and the second longitudinal axis.

In the folded configuration of FIG. 5, the first panel body 38a and the second panel body 38b may face away from each other. When in the tented configuration (FIG. 6), the first panel body 38a and the second panel body 38b may face away from each other and away from the surface S. In the unfolded configuration (e.g., FIG. 3), the first panel body 38a and the second panel body 38b (illustrated generally as the wall panel 38) may face in the same direction away from the wall 14.

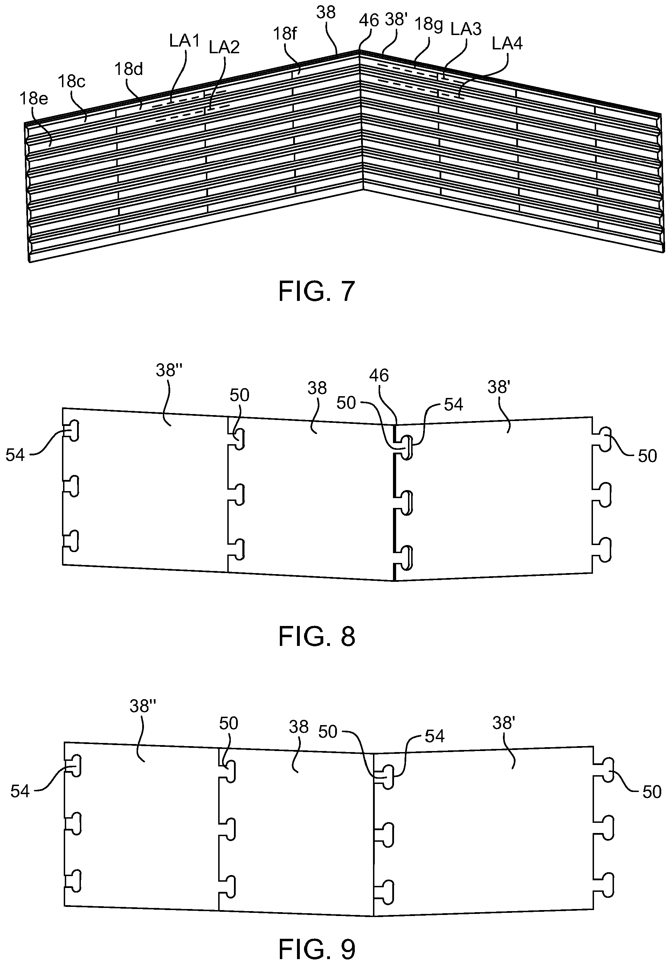

FIG. 7 illustrates a front perspective view of the wall panel 38 (i.e., a first panel) and another wall panel 38' (i.e., a second panel). A corner 46 is positioned at the interface of the wall panel 38 and the wall panel 38'. The corner 46 may, in some instances, represent a 90 degree angle between the wall panel 38 and the wall panel 38'. However, other angles are possible. The wall panel 38 has an end 46a (i.e., a first end) adjacent the corner 46. The wall panel 38' has an end 46b (i.e., a second end) adjacent the corner 46. The wall panel 38 includes a rail 18f adjacent the end 46a. The wall panel 38' includes a rail 18g adjacent the end 46b.

FIG. 7 illustrates a rail axis LA3 and a rail axis LA4 defined by rails 18 of the wall panel 38'. The rail axes LA3, LA4 of the wall panel 38' are oriented relative to one another similarly to the rail axes LA1, LA2 of the wall panel 38. The rail axes LA3, LA4 may be parallel to the rail axes LA1, LA2, respectively, and offset from one another in a direction perpendicular to the surface S (e.g., a vertical direction). The rail 18f and the rail 18g are provided at the same height relative to the surface S. Accordingly, hook assemblies 26 or other assemblies mounted upon the rail 18f and the rail 18g may interact with one another.

FIG. 8 illustrates a rear perspective view of the wall panel 38 the wall panel 38', and another wall panel 38". The end 46a of the wall panel 38 may include a mating feature 50. In the illustrated embodiment, three mating features 50 are illustrated. In other embodiments, fewer or more mating features 50 may be provided. In the illustrated embodiment, the mating feature 50 is a male-shaped protrusion. The mating feature 50 protrudes beyond the first end 46a. The end 46b of the wall panel 38" may include a mating feature 54. In the illustrated embodiment, three mating features 54 are illustrated. In other embodiments, fewer or more mating features 50 may be provided. In the illustrated embodiment, the mating feature 54 is a complementary female-shaped depression. In the illustrated embodiment, the mating feature 54 does not extend from the end 46b.

FIG. 8 illustrates the mating feature 50 uncoupled or disengaged from the mating feature 54. The mating feature 50 can be moved into position (FIG. 9) where the mating feature 50 engages the mating feature 54 to couple the wall panel 38 to the second wall panel 38'. Such a coupling may be formed at the corner 46, as in the coupling between the wall panel 38 and the wall panel 38'. Couplings may be formed at planar interfaces with wall panels (e.g., the wall panel 38 and the wall panel 38") being generally co-planar relative to one another. As illustrated in FIG. 8, the wall panel 38 may include mating features 50 at one longitudinal end (along rail axis LA1) thereof, and mating feature 54 at an opposite longitudinal end thereof. The mating features 50, 54 of the illustrated embodiment are each generally T-shaped. Other geometries or structures for mating features 50, 54 may otherwise secure adjacent wall panels 38, 38', 38" to each other.

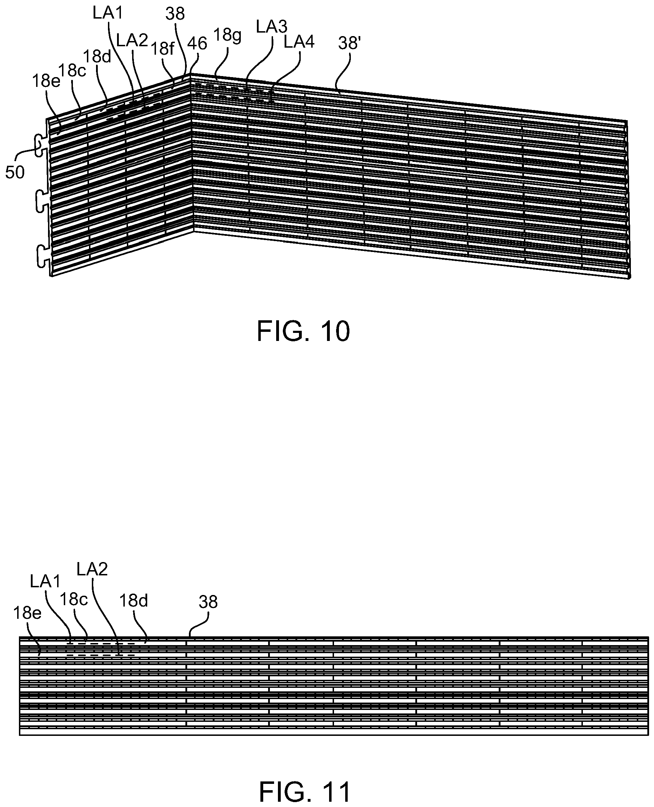

FIG. 10 illustrates the wall panel 38 and the wall panel 38'. In FIG. 10, the wall panel 38 includes mating features 50 which extend along the rail axis LA1 away from the corner 46 and beyond the bounds of the wall panel 38. These mating features 50 may be considered excess mating features, and may be removed or otherwise moved to within the bounds of the wall panel 38 as desired by a user.

FIG. 11 illustrates the wall panel 38 configured for use without another wall panel 38', 38". The wall panel 38 may be mounted on the wall 14 or otherwise supported upon the surface S.

Although aspects of the disclosure have been described in detail with reference to certain preferred embodiments, variations and modifications exist within the scope and spirit of one or more independent aspects as described. One or more independent features and/or advantages of the invention may be set forth in the following claims.

## Claims

1. A support panel comprising:
a panel body; and
a rail integrally formed with the panel body, the rail protruding away from the panel body, the rail including a surface configured to engage a mounting feature of an assembly to be mounted upon the panel body by the rail.

2. The support panel of claim 1, wherein rail further comprises a second surface configured to engage a corresponding second surface of the assembly to be mounted upon the panel body by the rail.

3. The support panel of claim 1, wherein the surface is a slot provided in the rail.

4. The support panel of claim 1, wherein the surface is an exterior surface of the rail.

5. The support panel of claim 1, wherein the panel body is generally planar.

6. The support panel of claim 1, wherein the rail is a first rail, the support panel further comprising a second rail integrally formed with the panel body and protruding away from the panel body, the second rail including a second surface and positioned adjacent to the first rail such that the second surface is aligned with the surface of the rail.

7. The support panel of claim 1, wherein the rail is a first rail, the support panel further comprising a second rail integrally formed with the panel body and protruding away from the panel body, the second rail offset from and parallel to the first rail.

8. A support panel comprising:
a first panel body including:
a first rail integrally formed with the first panel body, the first rail protruding from the first panel body, the first rail including a first surface configured to engage a mounting feature of an assembly;
a second panel body including:
a second rail integrally formed with the second panel body, the second rail protruding from the second panel body, the second rail including a second surface configured to engage the mounting feature of the assembly; and
a pivot coupling coupled to the first panel body and the second panel body,
wherein the pivot coupling is configured to permit movement of the first panel body relative to the second panel body.

9. The support panel of claim 8, wherein the pivot coupling is a living hinge integrally formed with the first panel body and the second panel body.

10. The support panel of claim 8, wherein the pivot coupling is a hinge rotatably coupled to both the first panel body and the second panel body.

11. The support panel of claim 8, wherein the pivot coupling permits rotational movement of the first panel body relative to the second panel body about an edge of the first panel body.

12. The support panel of claim 8, wherein the support panel is movable between a first configuration in which the first panel body and the second panel body face away from each other, and a second configuration in which the second panel body in the same direction.

13. The support panel of claim 8, wherein the first rail extends along a first longitudinal axis, the second rail extends along a second longitudinal axis parallel to the first longitudinal axis, and the pivot coupling permits pivoting movement of the first panel body relative to the second panel body about an edge of the first panel body, the edge extending parallel to the first longitudinal axis and the second longitudinal axis.

14. A panel assembly comprising:
a first panel including:
a first panel body having a first end,
a first rail protruding away from the first panel body, the first rail integrally formed with the first panel body, and
a first mating feature positioned adjacent the first end; and
a second panel including:
a second panel body having a second end,
a second rail protruding away from the second panel body, and
a second mating feature positioned adjacent the second end, the second mating feature engaging the first mating feature to couple the second panel body to the first panel body.

15. The panel assembly of claim 14, wherein the first mating feature is a protrusion and the second mating feature is a complementary depression.

16. The panel assembly of claim 15, wherein the protrusion extends from the first end.

17. The panel assembly of claim 15, wherein the protrusion and the depression are each generally T-shaped.

18. The panel assembly of claim 14, wherein the first mating feature is movable relative to the first panel body to engage the second mating feature.

19. The panel assembly of claim 14, wherein the first panel body is capable of being coupled to the second panel body in a plurality of configurations including an unfolded configuration in which the first panel body and the second panel body are generally co-planar with each other, and a tented configuration in which the first panel body and the second panel body are oriented relative to each other in a non-coplanar orientation.

20. The panel assembly of claim 14, further comprising a third panel having:
a third panel body having a third end;
a third rail protruding away from the third panel body; and
a third mating feature positioned adjacent the third end;
wherein the first panel body further has a fourth end opposite the first end, and the first panel further comprises a fourth mating feature positioned adjacent the fourth end, and
wherein the third mating feature is configured to engage the fourth mating feature to couple the first panel body to the third panel body.
